# EUROPEAN PATENT SPECIFICATION

(11) **EP 4 081 712 B1**
(45) Date of publication and mention of the grant of the patent: **31.01.2024**
(21) Application number: 20829819.0
(22) Date of filing: 11.12.2020
(51) Int. Cl.: F04B 39/00, F01N 1/16, F04B 39/12, F16L 55/033

(54) **EXHAUST COUPLING**
ABGASKUPPLUNG
COUPLAGE D'ÉCHAPPEMENT

(30) Priority: 23.12.2019 GB 201919169
(43) Date of publication of application: 02.11.2022
(73) Proprietor: Edwards, S.R.O., 78349 Lutin (CZ)
(72) Inventor: FNUKAL, Martin, 783 49 Lutin (CZ); CHROMEK, Lukas, 783 49 Lutín (CZ)
(74) Representative: Totman, Clare Elizabeth
(86) International application number: PCT/EP2020/085682
(87) International publication number: WO 2021/130029

(56) References cited:
- WO-A1-97/43547
- WO-A1-2019/114625
- CA-A1- 2 449 648
- CN-A- 108 167 567
- DE-A1- 3 444 924
- DE-A1-102013 113 813
- DE-U1-202009 005 535
- GB-A- 2 449 684
- GB-A- 2 474 683
- KR-U- 20000 017 203
- NL-A- 7 800 559
- US-A1- 2005 072 627
- US-B1- 6 367 580

## Description

### FIELD OF THE INVENTION

The field of the invention relates to an exhaust coupling for a pump.

This application claims priority to GB1919169.1 filed on 23 December 2019.

### BACKGROUND

Rotating machines, such as compressors or pumps, need to be carefully designed and manufactured in order for the moving parts to cooperate with each other accurately to provide efficient pumping. Pumps can be installed in a variety of locations and operated under differing conditions. In some circumstances, the operation of the pump can cause a noise nuisance. Although existing approaches can assist in reducing the noise nuisance, their performance is often inadequate. Accordingly, it is desired to reduce the noise nuisance.

WO2019/114625 shows a known vacuum pump with an exhaust coupling. There is no restrictor disclosed in the outlet aperture.

### SUMMARY

The invention is defined by the appended claims.

According to a first aspect, there is provided a vacuum pump exhaust coupling, comprising: an exhaust conduit extending between an inlet aperture for receiving a fluid from the vacuum pump and an outlet aperture for exhausting the fluid from the exhaust conduit, the outlet aperture having a restrictor operable to change a cross-sectional area of the outlet aperture, wherein the restrictor comprises a removable annual insert placeable within the outlet aperture which is dimensioned to reduce the cross-sectional area of the outlet aperture and wherein the exhaust conduit comprises at least one flexible section.

The first aspect recognizes that a problem with existing exhausts on pumps is that the amount of noise generated by the exhaust is tuned for any particular operating condition of the pump. Accordingly, an exhaust is provided. The exhaust may be for a pump. The exhaust may comprise a conduit or tube which extends from an inlet which receives or is provided with fluid from the pump to an outlet which exhausts the fluid from the conduit. The outlet may have a restrictor or narrowing which can operate to change an area of the outlet. In this way, the noise emitted by the exhaust can be varied by varying the area of the outlet aperture.

The restrictor may comprise a removable, detachable or changeable insert which is dimensioned or configured to reduce or decrease the area of the outlet aperture. Accordingly, the restrictor may be placed into the outlet aperture to reduce the area of the outlet aperture and so decrease the emitted exhaust noise or removed to speed up pump down time but increase the exhaust noise.

The removable insert may be dimensioned or configured to provide an outlet aperture with an area which is smaller than the area of the inlet aperture. This can help to attenuate the noise emitted from the exhaust.

The removable insert may comprise an annular insert. Accordingly, the removable insert may have an outer diameter which is dimensioned to match that of the inner diameter of the exhaust conduit at the outlet aperture, together with an internal longitudinal bore dimensioned to provide a reduced area.

The restrictor may comprise a variable restrictor which operates to present a variable area. Accordingly, the restrictor may be configured to allow a range of different cross-sectional areas to be selected in order to allow a range of different attenuations of the exhaust noise to be achieved.

The coupling may comprise a sensor which determines a temperature, a pressure and/or a flow rate of the fluid. The coupling may comprise a controller which may operate to actuate or trigger the restrictor to vary the area in response to the measured temperature, pressure and/or flow rate of the fluid. Hence, automatic control of the area and therefore automatic control of the exhaust noise can be performed by the controller.

The controller may determine a user preference and may operate to actuate the restrictor to vary the area in response to the user preference. Accordingly, the controller may receive a signal which indicates the user preference and vary the area of the restrictor to vary the noise emitted by the exhaust based on that user preference.

The controller may be operable, when the user preference is to reduce noise, to actuate the restrictor to decrease the cross-sectional area when at least one of the temperature, the pressure and the flow rate of the fluid increases. Hence, when the user preference is to attenuate the exhaust noise, the restrictor may decrease the area of the outlet aperture. The area may also be decreased as the load on the pump increases.

The controller may be operable, when the user preference is to reduce pump down time, to actuate the restrictor to increase the cross-sectional area when at least one of the temperature, the pressure and the flow rate of the fluid increases. Accordingly, when the user preference is to reduce the pump downtime, the controller may increase the area of the outlet aperture in order to increase the flow of the fluid exiting the exhaust coupling. The area may also be increased as the load on the pump increases.

The controller may be operable, when the temperature of the fluid, the pressure of the fluid, and/or the flow rate of the fluid falls below a threshold and/or when a selected time period has elapsed, to actuate the restrictor to close off the outlet aperture. Accordingly, when the fluid entering the exhaust coupling indicates that the pump has achieved a desired pump down state and/or when a desired amount of time has passed, the restrictor may be substantially closed in order to maximize the reduction in exhaust noise. It will be appreciated that most exhaust noise in these circumstances will then be due to vibration of the exhaust coupling rather than due to flow of fluid from the exhaust.

The controller is operable, when at least one of the temperature, the pressure and the flow rate of the fluid exceeds the threshold, to actuate the restrictor to reopen the outlet aperture. Accordingly, should fluid begin to flow through the exhaust coupling, meaning that the pump has no longer achieved the desired pump down state, then the restrictor may be opened to allow flow of the fluid from the outlet aperture.

Alternatively, or additionally, the restrictor may be self-regulating rather than being controlled by the controller. For example, an aperture in the restrictor may be varied via thermal expansion of the aperture material or a flap or a valve may be opened in the same way via temperature. If the flow rate is high then power and temperature are likely to change hence the valve could operate.

The variable restrictor may comprise comprises one or more of overlapping plates, an iris and a valve.

The conduit may have longitudinal sections having differing cross-sectional areas. Providing different lengths of the exhaust conduit with different cross-sectional areas provides for discontinuities in the flow through the exhaust coupling, as well as expansion and compression, all of which help to attenuate the propagation of noise from the inlet aperture to the outlet aperture.

The inlet aperture may have a smaller cross-sectional area than an adjacent longitudinal section of the conduit.

The inlet aperture may have a longitudinal projection extending from the exhaust conduit. Providing a projection which extends from the inlet aperture towards the pump helps to reduce resonant frequencies in the fluid, thereby further helping to attenuate exhaust noise by reducing the noise entering the inlet aperture.

The exhaust conduit may comprise at least one bend. Providing a bend helps to reduce line of sight propagation of noise from the inlet aperture to the outlet aperture.

The exhaust conduit may comprise one or more pairs of opposing bends. This further helps to attenuate propagation of exhaust noise from the inlet aperture to the outlet aperture.

The exhaust conduit may comprise one or more flexible sections. Providing flexible sections helps to absorb noise propagating along the exhaust conduit as well as helping to reduce the transfer of vibrations from the inlet aperture to the outlet aperture.

According to a second aspect, there is provided a vacuum pump comprising the exhaust conduit of the first aspect.

According to a third aspect, there is provided an exhaust coupling for a pump, comprising: an exhaust conduit extending between an inlet aperture for receiving a fluid from the pump and an outlet aperture for exhausting the fluid from the exhaust conduit, the outlet aperture having a restrictor operable to change a cross-sectional area of the outlet aperture.

The exhaust coupling may comprise the optional features of the first aspect mentioned above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an exhaust coupling according to one embodiment;
Figure 2 illustrates a restrictor according to one embodiment;
Figure 3 illustrates an exhaust coupling according to one embodiment; and
Figure 4 illustrates an exhaust coupling according to one embodiment.

### DESCRIPTION OF THE EMBODIMENTS

Before discussing the embodiments in any more detail, first an overview will be provided. Embodiments provide an arrangement whereby an outlet aperture of an exhaust coupling is reconfigurable to vary or change the cross-sectional area of that outlet aperture in order to alter the noise level emitted from that outlet aperture and/or vary the pump downtime of a pump such as a vacuum pump to which the exhaust coupling is coupled. In some embodiments, one or more inserts may be removably inserted into the outlet aperture to vary the cross-sectional area. In other embodiments a mechanism is provided which is operated to vary the cross-sectional area without needing to be removed. Variations in the internal diameter of the conduit, a protrusion from the inlet aperture into a chamber or manifold which is fed by the pump as well as bends in the elongate length of the conduit and/or one or more flexible portions of the conduit all assist to attenuate the noise from the outlet aperture.

### Exhaust Coupling - 1^{st} Arrangement

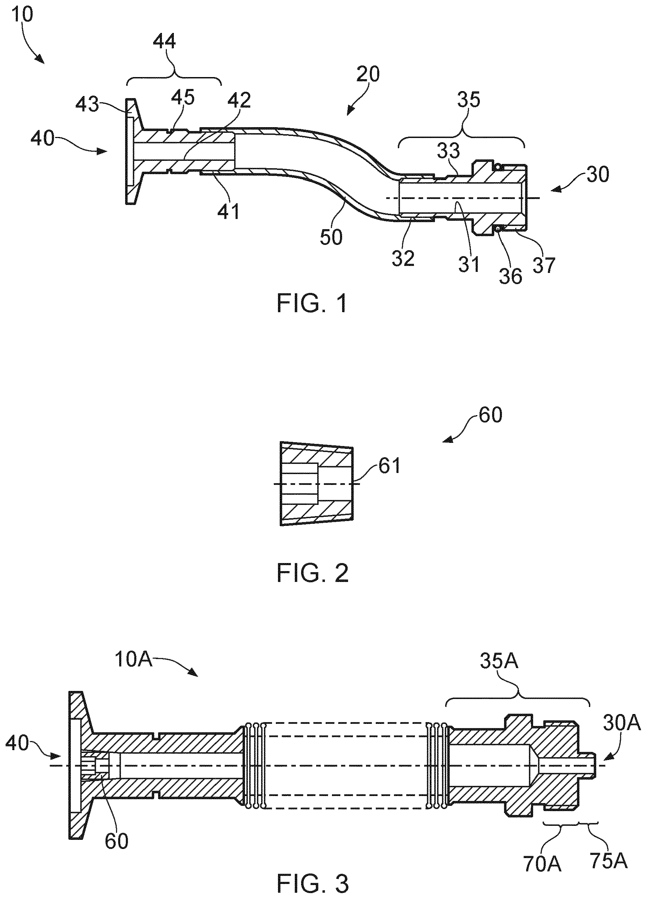

Figure 1 illustrates an exhaust coupling 10 according to one embodiment. The exhaust coupling 10 comprises a conduit 20 defining an inlet aperture 30 and an outlet aperture 40.

The conduit 20 comprises an inlet conduit portion 35 which is machined to have a through bore 31 of constant diameter and a radially outer surface 33 of a varying diameter. Towards the inlet aperture 30 is provided a thread portion 37 which engages with a corresponding thread on an exhaust chamber (not shown), together with an O-ring seal 36. It will be appreciated that other sealing arrangements are possible.

Distal from the inlet aperture 30 and proximate the outlet aperture 40 is provided a connection portion 32 which engages and seals with a first end of a flexible section 50. A second end of the flexible section 50 seals with a connection portion 41 of an outlet conduit portion 44.

The outlet conduit portion 44 also has a through bore 42 extending through the outlet conduit portion 44. The radially outer surface 45 of the outlet conduit portion 44 has a varying diameter and terminates at a fluted section 43 proximate the outlet aperture 40.

Figure 2 illustrates a restrictor 60 which is inserted into the outlet aperture 40. In this example, the restrictor 60 is slightly tapered. However, it will be appreciated that this need not be the case. The restrictor 60 has a narrowed aperture 61 which reduces the cross-sectional area of the outlet aperture 40 when inserted. In this example, the restrictor 60 is insertable and retained using a friction, press or push fit. However, it will be appreciated that mutual coupling such as screw threads or the like may be formed on the internal surface of the bore 42 and on the outer surface of the restrictor 60 to hold the two in tight engagement.

In operation, a user selects whether they wish to reduce pump down time or reduce exhaust noise. Should they wish to reduce pump down time then the restrictor 60 may be omitted, which enables the fluid to flow through the exhaust coupling 10 more quickly, albeit with a higher level of noise than would be the case were the restrictor 60 inserted. Should the user favour lower noise, then the restrictor 60 is inserted, which reduces the exhaust noise, although the pump down time is increased. The presence of the flexible section 50 helps to absorb noise from the fluid travelling through the exhaust coupling 10 as well as isolating vibrational noise being transferred between the inlet conduit portion 35 and the outlet conduit portion 44. Furthermore, the bend in the flexible portion 50 helps reduce line of sight noise between the inlet aperture 30 and the outlet aperture 40. In addition, the reduction in cross-sectional area between the flexible portion 50 and the outlet conduit portion 44, together with the further reduction in cross-sectional area caused by the restrictor 60, further helps to reduce the emission of exhaust noise.

### Exhaust Coupling - 2^{nd} Arrangement

Figure 3 illustrates an exhaust coupling 10A according to one embodiment with the restrictor 60 shown in place. This arrangement is similar to that shown in Figure 1, with the exception that the inlet conduit portion 35A has a narrowed portion 70A, together with a protruding portion 75A which terminates with a narrowed inlet aperture 30A.

In operation, the protruding portion 75A helps to further reduce exhaust noise being conveyed into the inlet aperture 30A from the coupling chamber. Also, the increase in diameter within inlet conduit portion 35A provides an expansion region which helps to further reduce the conveyance of noise from the inlet aperture 30A to the outlet aperture 40 defined by the insert 60.

### Exhaust Coupling - 3^{rd} Arrangement

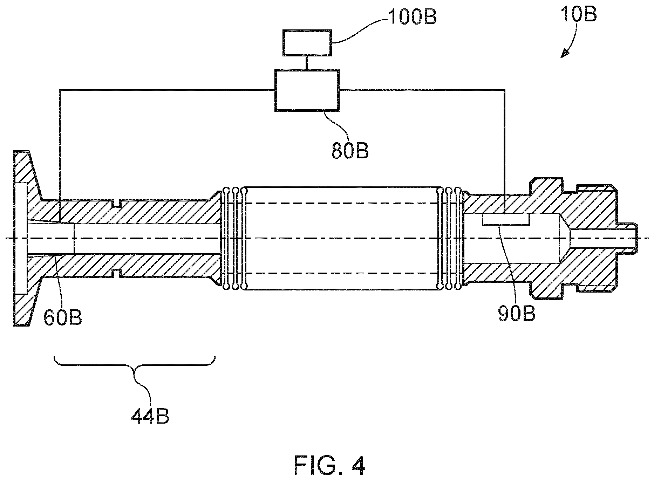

Figure 4 illustrates an exhaust coupling 10B, according to one embodiment. This arrangement is identical to that shown in either Figures 1 or 3, with the exception that a variable restrictor 60B is fixed within the outlet conduit portion 44B. The variable restrictor 60B comprises a device which operates to vary the cross-sectional area of its outlet, thereby varying the cross-sectional area of the outlet aperture 40B. Such a device may comprise a movable plate structure (such as an iris) or a valve (such as a needle valve) and the like. Alternatively, the variable restrictor 60B may comprise the restrictor 60 together with an actuator which displaces the restrictor 60 into and out of the outlet aperture 40.

A controller 80B is provided which couples with the variable restrictor 60B and a transducer 90B. The transducer 90B may typically be a pressure, temperature and/or fluid flow rate transducer which measures the pressure, temperature and/or fluid flow rate of the fluid within or being provided to the exhaust coupling 10B and so may be located elsewhere. The transducer 90B provides a signal to the controller 80B indicative of the measured characteristic of the fluid. The controller 80B also receives a signal from a user preference generator 100B (such as a switch) which indicates an operating preference of the user.

In operation, the user indicates using the user preference generator 100B whether they prefer greater noise or faster pump down times. Should the user prefer reduced noise then the controller 80B will operate to reduce the cross-sectional area of the variable restrictor 60B as the pressure, temperature and/or flow rate of the fluid increases in order to reduce noise. Conversely, should the user preference generator 100B indicate that the user prefers a faster pump down, then the controller 80B will operate the variable restrictor 60B to increase the cross-sectional area as the pressure, temperature and/or flow rate of the fluid increases. The controller 80B may also be configured to control the variable restrictor 60B to have a maximum opening when the pump is first turned on (typically this will also coincide with a pump down of the chamber) then after a selected time (such as number of minutes) the opening of the variable restrictor 60B is controlled to reduce to minimise noise. The user can configure the time period depending upon chamber size or the pressure the desired to be achieved.

Irrespective of the particular user preference, the controller 80B is preferably operable, when the temperature, pressure and/or flow rate of the fluid achieves a desired state (typically crossing a threshold amount) and/or after a selected period of time to reduce the cross-sectional area of the variable restrictor 60B in order to substantially close the outlet aperture 40B. This helps to further reduce exhaust noise when substantially no fluid flow is occurring. Should the pressure, temperature and/or flow rate increase back above the threshold amount then the controller 80B will control the variable restrictor 60B to increase its cross-sectional area and reopen the outlet aperture 40B.

In a further embodiment, the controller 80B may be omitted. Instead, the variable restrictor 60B is self-regulating rather than being controlled by the controller 80B. For example, an aperture in the restrictor is varied via thermal expansion of the aperture material or a flap or a valve is opened due to changes in temperature. If the flow rate is high then power and temperature are likely to change hence the valve would operate.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

exhaust coupling 10; 10A; 10B
conduit 20
inlet aperture 30; 30A
through bore 31
connection portion 32
outer surface 33; 45
inlet conduit portion 35; 35A
O-ring seal 36
thread portion 37
outlet aperture 40; 40B
connection portion 41
through bore 42
fluted section 43
outlet conduit portion 44; 44B
flexible section 50
restrictor 60
variable restrictor 60B
aperture 61
narrowed portion 70A
protruding portion 75A
controller 80B
transducer 90B

## Claims

1. A vacuum pump comprising: an exhaust coupling, comprising:
an exhaust conduit extending between an inlet aperture for receiving a fluid from said vacuum pump and an outlet aperture for exhausting said fluid from said exhaust conduit, said outlet aperture having a restrictor operable to change a cross-sectional area of said outlet aperture, wherein said restrictor comprises a removable annular insert placeable within said outlet aperture which is dimensioned to reduce said cross-sectional area of said outlet aperture and wherein said exhaust conduit comprises at least one flexible section.

2. The vacuum pump of claim 1, wherein, instead of the removable annular insert, said restrictor comprises a variable restrictor operable to provide a variable cross-sectional area.

3. The vacuum pump of claim 2, comprising a sensor operable to determine at least one of a temperature, a pressure and a flow rate of said fluid and a controller operable to actuate said restrictor in response to at least one of said temperature, said pressure and said flow rate of said fluid.

4. The vacuum pump of claim 3, wherein said controller is operable to determine a user preference to actuate said restrictor in response to said user preference.

5. The vacuum pump of claim 4, wherein said controller is operable, when said user preference is to reduce noise, to actuate said restrictor to decrease said cross-sectional area when at least one of said temperature, said pressure and said flow rate of said fluid increases.

6. The vacuum pump of claim 4 or 5, wherein said controller is operable, when said user preference is to reduce pump down time, to actuate said restrictor to increase said cross-sectional area when at least one of said temperature, said pressure and said flow rate of said fluid increases.

7. The vacuum pump of any one of claims 3 to 6, wherein said controller is operable, when at least one of said temperature, said pressure and said flow rate of said fluid falls below a threshold and after a selected period of time, to actuate said restrictor to close off said outlet aperture.

8. The vacuum pump of any one of claims 3 to 7, wherein said controller is operable, when at least one of said temperature, said pressure and said flow rate of said fluid exceeds said threshold, to actuate said restrictor to reopen said outlet aperture.

9. The vacuum pump of any preceding claim, wherein said conduit has longitudinal sections having differing cross-sectional areas.

10. The vacuum pump of any preceding claim, wherein said inlet aperture has a smaller cross-sectional area than an adjacent longitudinal section of said conduit.

11. The vacuum pump of any preceding claim, wherein said inlet aperture has a longitudinal projection extending from said exhaust conduit.

12. The vacuum pump of any preceding claim, wherein said exhaust conduit comprises at least one bend.

## Patentansprüche

1. Eine Vakuumpumpe mit: einer Auslasskupplung, die Folgendes aufweist:
eine Auslassleitung, die sich zwischen einer Einlassöffnung zur Aufnahme eines Fluids aus der Vakuumpumpe und einer Auslassöffnung zum Auslassen des Fluids aus der Auslassleitung erstreckt, wobei die Auslassöffnung einen Begrenzer aufweist, der zum Verändern einer Querschnittsfläche der Auslassöffnung funktionsfähig ist, wobei der Begrenzer einen entfernbaren ringförmigen Einsatz aufweist, der in der Auslassöffnung platzierbar ist und dazu dimensioniert ist, die Querschnittsfläche der Auslassöffnung zu reduzieren, und wobei die Auslassleitung mindestens einen flexiblen Abschnitt aufweist.

2. Vakuumpumpe nach Anspruch 1, wobei der Begrenzer anstelle des entfernbaren ringförmigen Einsatzes einen variablen Begrenzer umfasst, der dazu funktionsfähig ist, eine variable Querschnittsfläche bereitzustellen.

3. Vakuumpumpe nach Anspruch 2, die Folgendes aufweist: einen Sensor, der dazu funktionsfähig ist, mindestens entweder eine Temperatur, einen Druck oder eine Durchflussmenge des Fluids zu bestimmen, und eine Steuereinrichtung, die dazu funktionsfähig ist, den Begrenzer als Reaktion auf mindestens entweder die Temperatur, den Druck oder die Durchflussmenge des Fluids zu betätigen.

4. Vakuumpumpe nach Anspruch 3, wobei die Steuereinrichtung zur Bestimmung einer Benutzerpräferenz funktionsfähig ist, um den Begrenzer als Reaktion auf die Benutzerpräferenz zu betätigen.

5. Vakuumpumpe nach Anspruch 4, wobei das Steuereinrichtung, wenn die Benutzerpräferenz in einer Reduzierung von Geräusch besteht, zur Betätigung des Begrenzers funktionsfähig ist, um die Querschnittsfläche zu verringern, wenn mindestens entweder die Temperatur, der Druck oder die Durchflussmenge des Fluids zunimmt.

6. Vakuumpumpe nach Anspruch 4 oder 5, wobei die Steuereinrichtung, wenn die Benutzerpräferenz in einer Reduzierung der Stillstandzeit der Pumpe besteht, zur Betätigung des Begrenzers funktionsfähig ist, um die Querschnittsfläche zu vergrößern, wenn mindestens entweder die Temperatur, der Druck oder die Durchflussmenge des Fluids zunimmt.

7. Vakuumpumpe nach einem der Ansprüche 3 bis 6, wobei die Steuereinrichtung dazu funktionsfähig ist, wenn mindestens entweder die Temperatur, der Druck oder die Durchflussmenge des Fluids unter einen Schwellenwert fällt, und nach einer ausgewählten Zeitspanne, den Begrenzer zu betätigen, um die Auslassöffnung zu schließen.

8. Vakuumpumpe nach einem der Ansprüche 3 bis 7, wobei die Steuereinrichtung dazu funktionsfähig ist, den Begrenzer zu betätigen, um die Auslassöffnung wieder zu öffnen, wenn mindestens entweder die Temperatur, der Druck oder die Durchflussmenge des Fluids den Schwellenwert überschreitet.

9. Vakuumpumpe nach einem der vorhergehenden Ansprüche, wobei die Leitung Längsabschnitte mit unterschiedlichen Querschnittsflächen aufweist.

10. Vakuumpumpe nach einem der vorhergehenden Ansprüche, wobei die Einlassöffnung eine kleinere Querschnittsfläche als ein angrenzender Längsabschnitt der Leitung aufweist.

11. Vakuumpumpe nach einem der vorhergehenden Ansprüche, wobei die Einlassöffnung einen Längsvorsprung aufweist, der sich von der Auslassleitung aus erstreckt.

12. Vakuumpumpe nach einem der vorhergehenden Ansprüche, wobei die Auslassleitung mindestens eine Biegung aufweist.

## Revendications

1. Pompe à vide comprenant : un couplage d'échappement, comprenant :
un conduit d'échappement s'étendant entre une ouverture d'entrée permettant la réception d'un fluide depuis ladite pompe à vide et une ouverture de sortie permettant l'échappement dudit fluide depuis ledit conduit d'échappement, ladite ouverture de sortie présentant un limiteur utilisable pour changer une aire en coupe transversale de ladite ouverture de sortie, dans laquelle ledit limiteur comprend un insert annulaire amovible pouvant être placé à l'intérieur de ladite ouverture de sortie qui est dimensionné pour réduire ladite aire en coupe transversale de ladite ouverture de sortie et dans laquelle ledit conduit d'échappement comprend au moins une section flexible.

2. Pompe à vide selon la revendication 1, dans laquelle, au lieu de l'insert annulaire amovible, ledit limiteur comprend un limiteur variable utilisable pour fournir une aire en coupe transversale variable.

3. Pompe à vide selon la revendication 2, comprenant un capteur utilisable pour déterminer au moins l'un parmi une température, une pression et un débit dudit fluide et un dispositif de commande utilisable pour actionner ledit limiteur en réponse à au moins l'un parmi ladite température, ladite pression et ledit débit dudit fluide.

4. Pompe à vide selon la revendication 3, dans laquelle ledit dispositif de commande est utilisable pour déterminer une préférence d'utilisateur pour actionner ledit limiteur en réponse à ladite préférence d'utilisateur.

5. Pompe à vide selon la revendication 4, dans laquelle ledit dispositif de commande est utilisable, lorsque ladite préférence d'utilisateur est de réduire un bruit, pour actionner ledit limiteur pour réduire ladite aire en coupe transversale lorsqu'au moins l'un parmi ladite température, ladite pression et ledit débit dudit fluide augmente.

6. Pompe à vide selon la revendication 4 ou 5, dans laquelle ledit dispositif de commande est utilisable, lorsque ladite préférence d'utilisateur est de réduire un temps d'arrêt de pompe, pour actionner ledit limiteur pour augmenter ladite aire en coupe transversale lorsqu'au moins l'un parmi ladite température, ladite pression et ledit débit dudit fluide augmente.

7. Pompe à vide selon l'une quelconque des revendications 3 à 6, dans laquelle ledit dispositif de commande est utilisable, lorsqu'au moins l'un parmi ladite température, ladite pression et ledit débit dudit fluide devient inférieur à un seuil et après une période de temps sélectionnée, pour actionner ledit limiteur pour fermer ladite ouverture de sortie.

8. Pompe à vide selon l'une quelconque des revendications 3 à 7, dans laquelle ledit dispositif de commande est utilisable, lorsqu'au moins l'un parmi ladite température, ladite pression et ledit débit dudit fluide dépasse ledit seuil, pour actionner ledit limiteur pour rouvrir ladite ouverture de sortie.

9. Pompe à vide selon l'une quelconque des revendications précédentes, dans laquelle ledit conduit présente des sections longitudinales présentant des aires en coupe transversale différentes.

10. Pompe à vide selon l'une quelconque des revendications précédentes, dans laquelle ladite ouverture d'entrée présente une aire en coupe transversale plus petite que celle d'une section longitudinale adjacente dudit conduit.

11. Pompe à vide selon l'une quelconque des revendications précédentes, dans laquelle ladite ouverture d'entrée présente une saillie longitudinale s'étendant depuis ledit conduit d'échappement.

12. Pompe à vide selon l'une quelconque des revendications précédentes, dans laquelle ledit conduit d'échappement comprend au moins une courbure.
